# EUROPÄISCHE PATENTSCHRIFT

(11) **EP 1 020 326 B1**
(45) Veröffentlichungstag und Bekanntmachung des Hinweises auf die Patenterteilung: **31.03.2004**
(21) Anmeldenummer: 00100501.6
(22) Anmeldetag: 11.01.2000
(51) Int. Cl.: B60R 1/06

(54) **Klemmhalterung zur Befestigung von Rückblickspiegeln**
Clamp for mounting rear view mirrors
Dispositif de serrage pour le montage de rétroviseurs

(30) Priorität: 13.01.1999 DE 19900988
(43) Veröffentlichungstag der Anmeldung: 19.07.2000
(73) Patentinhaber: MEKRA Lang GmbH & Co. KG, 90765 Fürth (DE)
(72) Erfinder: Lang, Heinrich, 91465 Ergersheim (DE); Popp, Albrecht, 91629 Weihenzell (DE); Pfanz, Jürgen, 91583 Schillingsfürst (DE)
(74) Vertreter: Winter, Brandl, Fürniss, Hübner, Röss, Kaiser, Polte Partnerschaft

(56) Entgegenhaltungen:
- DE-A- 2 239 853
- DE-U- 8 906 260
- DE-U- 9 108 483

## Beschreibung

Die Erfindung betrifft eine Klemmhalterung zur Befestigung von Rückblickspiegeln an einem Fahrzeug.

Rückblickspiegelanordnungen, wie z.B. sogenannte "Hörnerspiegel" wie sie aus der EP-A-0 865 967 bekannt sind, sind inzwischen hochkomplexe Systeme und weisen ein erhebliches Bauvolumen auf. Diese Spiegelsystem werden üblicherweise an der Karosserie angeschraubt. Da diese Spiegelsysteme sehr diebstahlgefährdet sind, werden sie insbesondere bei Bussen nachts abgeschraubt und im Businneren verwahrt. Eine einfache Montage und Demontage ist daher wünschenswert.

Es ist daher Aufgabe der vorliegenden Erfindung, eine Halterung zur Befestigung von Rückspiegeln an Fahrzeugen anzugeben, die zum einen sicher ist und zum anderen eine einfache Montage und Demontage ermöglicht.

Die Lösung dieser Aufgabe erfolgt durch eine Klemmhalterung gemäß den Merkmalen des Anspruch 1.

Die erfindungsgemäße Klemmhalterung umfaßt ein am Fahrzeug befestigbares Klemmgegenlagerteil, ein Einschubteil mit einem spiegelseitigen und einem fahrzeugseitigen Ende, dessen spiegelseitiges Ende mit dem Rückblickspiegel verbindbar ist und dessen fahrzeugseitiges Ende in das Klemmgegenlagerteil einführbar ist, und einen an dem Einschubteil verschiebbar gelagerten Klemmkeil, der durch Verschieben in Klemmrichtung das Einschubteil und den Klemmkeil mit dem Klemmgegenlagerteil verklemmt. Das Einschubteil wird bei der Montage in das Klemmgegenlagerteil eingeschoben, wodurch bereits ein gewisser Halt gegeben ist. Anschließend wird der Klemmkeil mittels Schrauben verschoben, so daß die vom Klemmkeil abgewandte Seite des Einschubteils und der Klemmteil in entgegengesetzter Richtung auseinanderstreben und in der Klemmgegenhalterung verkeilt werden.

Gemäß einer vorteilhaften Ausgestaltung der Erfindung ist der Klemmkeil an dem Einschubteil quer zur Einführrichtung des Einschubteils in das Klemmgegenlager verschiebbar. Der Klemmkeil mittels den Klemmschrauben seitlich zugänglich gemacht werden.

Gemäß einer weiteren vorteilhaften Ausgestaltung der Erfindung ist das Klemmgegenlager als Rohr mit rechteckigem Querschnitt ausgebildet, in dem das Einschubteil an zwei gegenüberliegenden Seiten des Klemmgegenlagers eingeklemmt wird. Die rechteckige Form bewirkt eine formschlüssige Fixierung des Einschubteils in dem Klemmgegenlager.

Die Klemmhalterung gemäß der vorliegenden Erfindung ist insbesondere für hornförmige Spiegelanordnungen geeignet, wie sie in der am gleichen Tag wie die vorliegende Anmeldung hinterlegten Anmeldung "Hornförmige Rückblickspiegelanordnung für Nutzfahrzeuge, insbesondere für Omnibusse" (Anwaltsaktenzeichen P/11ML0305/DE) beschrieben ist. Insofern wird auf diese Anmeldung vollinhaltlich Bezug genommen.

Die übrigen Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung einer bevorzugten Ausführungsform anhand der Zeichnungen:

Es zeigt:
Fig. 1 eine perspektivische Explosionsdarstellung der erfindungsgemäßen Klemmhalterung,
Fig. 2 eine Seitenansicht der erfindungsgemäßen Klemmhalterung, und
Fig. 3 einen Schnitt durch das Teil gemäß Fig. 2 parallel zur Zeichnungsebene.

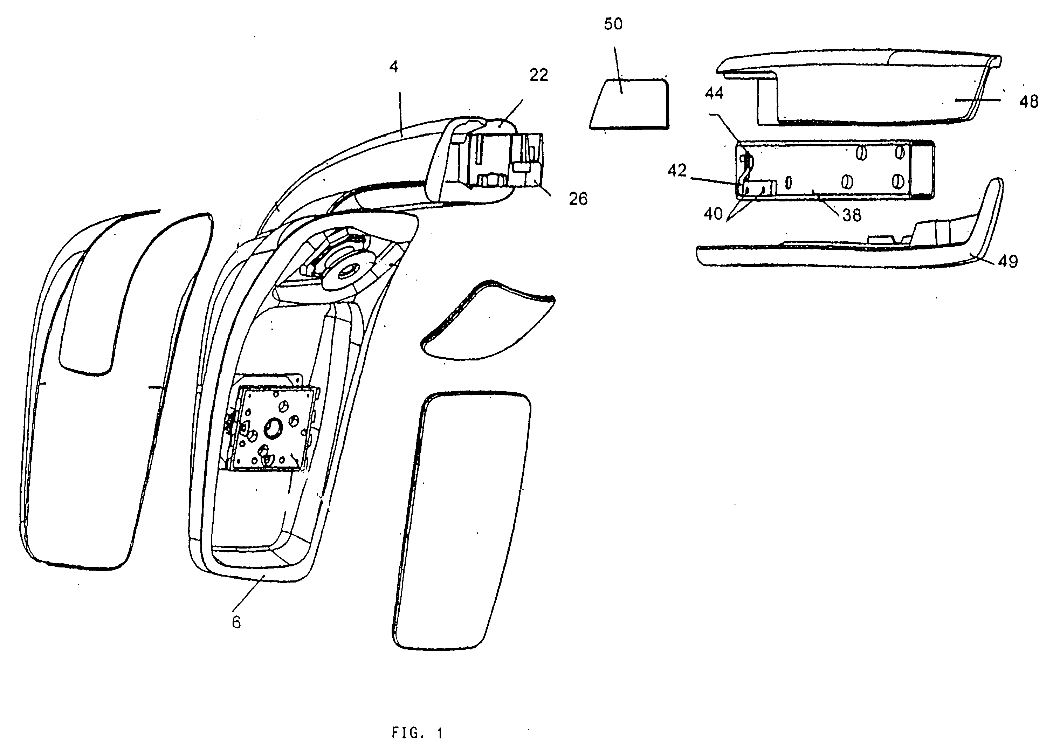

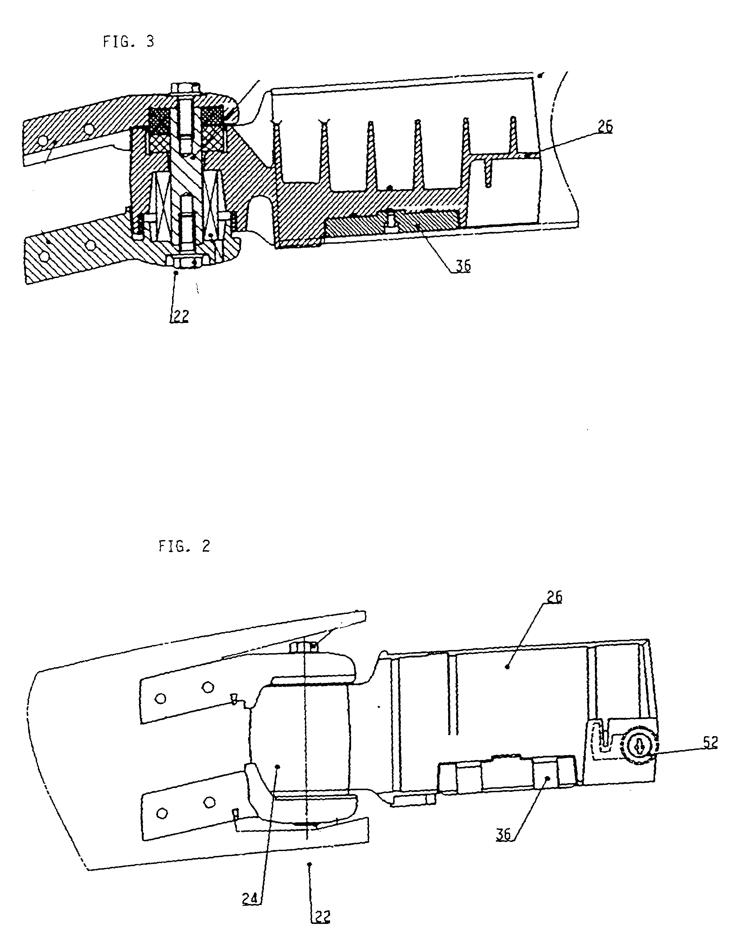

Fig. 1 zeigt perspektivisch eine bevorzugte Ausführungsform der erfindungsgemäßen Klemmhalterung in Explosionsdarstellung als Teil einer hornförmigen Rückblickspiegelanordnung 1 mit Haltearm 4 an dem ein Spiegelkopf 6 befestigt ist, wie sie in der am gleichen Tag hinterlegten Anmeldung "Hornförmige Rückblickspiegelanordnung für Nutzfahrzeuge, insbesondere für Omnibusse" (Anwaltsaktenzeichen P/11ML0305/DE) beschrieben ist. Die Rückblickspiegelanordnung 1 endet fahrzeugseitig in der erfindungsgemäßen Klemmhalterung. Details der beispielhaften Ausführungsform der erfindungsgemäßen Klemmhalterung nach Fig. 1 sind in Fig. 2 und 3 gezeigt.

Das fahrzeugseitige Ende des Haltearms 4 ist mit einer Verstell- und Abklappeinrichtung 22 verbunden, mittels der sich die Grundwinkeleinstellung der Spiegelanordnung 1 verstellen läßt und mittels der sich die Spiegelanordnung 1 nach vorne - in Richtung Windschutzscheibe - oder nach hinten - in Richtung Seitenscheibe - wegklappen läßt. Die Verstell- und Abklappeinrichtung 22 umfaßt ein Scharniergelenk 24 mit zwei Gelenkarmen, wobei ein Gelenkarm das fahrzeugseitige Ende des Haltarms 4 und der andere Gelenkarm Teil der erfindungsgemäßen Klemmhalterung ist.

Die Klemmhalterung umfaßt ein Einschubteil 26, an dem ein Klemmkeil 36 vershiebbar gelagert ist, und ein rechteckrohrförmiges Klemmgegenlager 38. Das Klemmgegenlager 38 wird an der Karosserie des Fahrzeugs angeschraubt. Bei der Montage der Spiegelanordnung wird das Einschubteil 26 in das Klemmgegenlager 38 eingeschoben und durch Verschieben des Klemmkeils 36 mittels Klemmschrauben 40 festgeklemmt. Der Klemmkeil 36 ist quer zur Einführrichtung des Einschubteils 26 in das Klemmgegenlager 38 vershiebbar. Durch das Vershieben des Klemmkeils 36 wird das Einschubteil 26 nach oben gedrückt und der Klemmkeil 36 drückt nach unten gegen die obere bzw. untere Begrenzung des Klemmgegenlagers 38.

Aus Sicherheitsgründen ist zusätzlich eine Rasterhalteeinrichtung vorgesehen, die ein am Klemmgegenlager 38 befestigtes Rasterfederelement 42 umfaßt. Das Rasterfederelement 42 ragt durch eine Öffnung 44 im Klemmgegenlager hindurch. Bei Einführung des Einschubteils 26 in das Klemmgegenlager 38 wird das Rsterfederelement 42 zurückgezogen bzw. zurückgedrückt und rastet dann in eine entsprechende Ausnehmung im Einschubteil 26 ein. Die Klemmhalterung wird durch eine obere und eine untere Abdeckung 48 und 49 sowie durch einen Montagedeckel 50 abgedeckt. Der Montagedeckel 50 deckt die Klemmschrauben 40 und das Rasterfederelement 42 ab. Zur Demontage der Spiegelanordnung, genauer zur Demontage von Spiegelkopf 6 mit Haltearm 4 muß lediglich der Montagedeckel 50 entfernt und die Klemmschrauben 40 gelöst werden.

In Fig. 3 ist noch eine mittels Schlüssel betätigbare Absperrvorrichtung 52 gezeigt, die am Klemmgegenlager 38 angeordnet ist und durch die sich das Einschubteil 26 in dem Klemmgegenlager 38 sichern läßt. Die Absperrvorrichtung 52 umfaßt einen mittels Schlüssel drehbaren Schlüsselzylinder 54 an dem ein Haken 56 befestigt ist. Durch Drehen des Schlüsselzylinders 54 mit einem passenden Schlüssel läßt sich der Haken 56 mit dem Einschubteil 26 in Eingriff bringen und wieder daraus lösen. Die Absperrvorrichtung 52 stellt eine Diebstahlsicherung dar.

Mit der Klemmhalterung gemäß der vorliegenden Erfindung lassen sich verschiedenste Rückblickspiegelanordnungen an Fahrzeugen befestigen.

### Bezugszeichenliste

- 1: Rückblickspiegelanordnung
- 4: Haltearm
- 6: Spiegelkopf
- 22: Verstell- und Abklappeinrichtung
- 24: Scharniergelenk
- 26: Einschubteil der Halterung 2
- 36: Klemmkeil
- 38: Klemmgegenlager
- 40: Klemmschrauben
- 42: Rasterfederelement
- 44: Öffnung im Klemmgegenlager 38 für das Rasterfederelement 42
- 48: obere Abdeckung der Halterung 2
- 49: untere Abdeckung der Halterung 2
- 50: Montagedeckel
- 52: Absperrvorrichtung
- 54: Schlüsselzylinder
- 56: Haken

## Patentansprüche

1. Klemmhalterung zur Befestigung von Rückblickspiegeln (1) an einem Fahrzeug, mit:
- einem am Fahrzeug befestigtbaren Klemmgegenlager (38),
- einem Einschubteil (26) mit einem spiegelseitigen und einem fahrzeugseitigen Ende, dessen spiegelseitiges Ende mit dem Rückblickspiegel (1) verbindbar ist und dessen fahrzeugseitiges Ende in das Klemmgegenlager (38) einführbar ist,
- einem an dem Einschubteil (26) verschiebbar gelagerten Klemmkeil (36), der durch Verschieben in Klemmrichtung das Einschubteil (26) und den Klemmkeil (36) mit dem Klemmgegenlager (38) verklemmt.

2. Halterung nach Anspruch 1, **dadurch gekennzeichnet, daß** der Klemmkeil (36) an dem Einschubteil (26) in einer Richtung quer zur Einschubrichtung des Einschubteils (26) verschiebbar ist.

3. Halterung nach einem der vorhergehenden Ansprüche, **dadurch gekennzeichnet, daß** das Klemmgegenlager (38) ein rechteckförmiges Rohrstück ist.

4. Halterung nach einem der vorhergehenden Ansprüche, **gekennzeichnet durch** eine Rasterhalteeinrichtung (42, 44).

5. Halterung nach Anspruch 4, **dadurch gekennzeichnet, daß** die Rasterhalteeinrichtung (42, 44) ein Federelement (42) umfaßt, das an dem Klemmgegenlager (38) befestigt ist und das in eine entsprechende Ausnehmung im Einschubteil (26) einrastet.

6. Halterung nach einem der vorhergehenden Ansprüche, **dadurch gekennzeichnet, daß** der Klemmkeil (36) mittels Klemmschrauben (40) in Klemmrichtung verschiebbar ist.

7. Halterung nach Anspruch 6, **dadurch gekennzeichnet, daß** die Klemmschrauben (40) in Schraublöcher im Klemmgegenlager (38) eingeschraubt sind.

8. Halterung nach einem der vorhergehenden Ansprüche, **gekennzeichnet durch** eine mit einem Schlüssel betätigbare Absperrvorrichtung (52) als Diebstahlsicherung.

9. Halterung nach Anspruch 8, **dadurch gekennzeichnet, daß** die Absperrvorrichtung (52) einen Schlüsselzylinder (54) mit Sperrhaken (56) umfaßt, und daß durch Drehung des Schlüsselzylinders (54) mit einem passenden Schlüssel der Haken (56) mit dem Einschubteil (26) in Eingriff bringbar ist.

## Claims

1. A clamping support for fastening rearview mirrors (1) on a vehicle, comprising:
- a clamp reception fixture (38) affixable to a vehicle,
- an insertable component (26) with a mirror-side end and a vehicle-side end, the mirror-side end of which is connectable with the rearview mirror (1), and the vehicle-side end of which is insertable into the clamp reception fixture (38),
- a clamp wedge (36) slidably mounted on the insertable component (26) which, by movement in the clamping direction, clamps the insertable component (26) and the clamp wedge (36) with the clamp reception fixture (38).

2. A support in accordance with claim 1, **characterized in that** the clamp wedge (36) is slidable on the insertable component (26) in a direction transverse to the direction of insertion of the insertable component (26).

3. A support in accordance with any one of the foregoing claims, **characterized in that** the clamp reception fixture (38) is a rectangular tubular section.

4. A support in accordance with any one of the foregoing claims, **characterized by** a snap-in detent (42, 44).

5. A support in accordance with claim 4, **characterized in that** the snap-in detent (42, 44) includes a spring member (42) which is fastened on the clamp reception fixture (38) and which releasably interlocks into a corresponding recess in the insertable component (26).

6. A support in accordance with any one of the foregoing claims, **characterized in that** the clamp wedge (36) is slidable in the direction of clamping by means of clamp screws (40).

7. A support in accordance with claim 6, **characterized in that** the clamp screws (40) are screwed into tapped holes in the clamp reception fixture (38).

8. A support in accordance with any one of the foregoing claims, **characterized by** a locking device (52) activated by a key, serving as protection against theft.

9. A support in accordance with claim 8, **characterized in that** the locking device (52) encompasses a locking cylinder (54) with detent hooks (56) and by turning the locking cylinder (54) with an appropriate key, the hook (56) is interlockable with the insertable component (26).

## Revendications

1. Support de serrage pour le montage de rétroviseurs (1) contre un véhicule, comprenant
- un palier-support de serrage (38) à fixer contre le véhicule,
- une partie enfichable (26) avec une extrémité du côté miroir et une extrémité du côté véhicule, l'extrémité du côté miroir étant destinée à être assemblée au rétroviseur (1) et l'extrémité du côté véhicule étant destinée à être insérée dans le palier-support de serrage (38),
- une clavette de serrage (36), qui est logée de manière mobile contre la partie enfichable (26) et qui, par un déplacement dans la direction de serrage, bloque la partie enfichable (26) et la clavette de serrage (36) avec le palier-support de serrage (38).

2. Support selon la revendication 1, **caractérisé en ce que** la clavette de serrage (36) peut coulisser sur la partie enfichable (26) dans une direction transversale à la direction d'introduction de la partie enfichable (26).

3. Support selon l'une quelconque des revendications précédentes, **caractérisé en ce que** le palier-support de serrage (38) est un élément tubulaire rectangulaire.

4. Support selon l'une quelconque des revendications précédentes, **caractérisé par** un dispositif de retenue par encliquetage (42, 44).

5. Support selon la revendication 4, **caractérisé en ce que** le dispositif de retenue par encliquetage (42, 44) comporte un élément à ressort (42), qui est fixé contre le palier-support de serrage (38) et qui s'enclenche dans un évidement correspondant dans la partie enfichable (26).

6. Support selon l'une quelconque des revendications précédentes, **caractérisé en ce que** la clavette de serrage (36) est mobile dans la direction de blocage au moyen de vis de serrage (40).

7. Support selon la revendication 6, **caractérisé en ce que** les vis de serrage (40) sont vissées dans des trous taraudés dans le palier-support de serrage (38).

8. Support selon l'une quelconque des revendications précédentes, **caractérisé par** un dispositif de verrouillage (52) à actionner avec une clé et formant un élément antivol.

9. Support selon la revendication 8, **caractérisé en ce que** le dispositif de verrouillage (52) comporte un barillet (54) avec un crochet de verrouillage (56) et **en ce que**, par une rotation du barillet (54) avec une clé adaptée, le crochet (56) est amené en prise avec la partie enfichable (26).
